Europäisches Patentamt

European Patent Office

Office européen des brevets

(19)

(11) Veröffentlichungsnummer: **0 122 224**
**B1**

(12) **EUROPÄISCHE PATENTSCHRIFT**

(45) Veröffentlichungstag der Patentschrift:
**01.04.87**

(21) Anmeldenummer: **84810096.2**

(22) Anmeldetag: **27.02.84**

(51) Int. Cl.⁴: **C 09 B 67/26,** C 09 B 56/04,
**D 21 H 3/80**

(54) **Konzentrierte lagerstabile wässrige Lösungen gelber bis grünstichig gelber Stilbenazo(xy)farbstoffe.**

(30) Priorität: **04.03.83 CH 1193/83**

(43) Veröffentlichungstag der Anmeldung:
**17.10.84 Patentblatt 84/42**

(45) Bekanntmachung des Hinweises auf die Patenterteilung:
**01.04.87 Patentblatt 87/14**

(84) Benannte Vertragsstaaten:
**CH DE FR GB IT LI**

(56) Entgegenhaltungen:
**EP - A - 0 053 220**
**DE - A - 2 820 487**
**DE - A - 3 046 450**
**FR - A - 2 289 578**
**FR - A - 2 416 926**
**GB - A - 2 072 213**
**US - A - 3 679 353**

(73) Patentinhaber: **CIBA-GEIGY AG, Klybeckstrasse 141,
CH-4002 Basel (CH)**

(72) Erfinder: **Markert, Jürgen, Dr., Im Guntengarten 32,
CH-4107 Ettingen (CH)**

## Beschreibung

Gegenstand der Erfindung ist ein Verfahren zur Herstellung konzentrierter lagerstabiler wässriger Farbstofflösungen enthaltend ein Gemisch gelber bis grünstichig gelber Stilbenazo(xy)farbstoffe, die nach diesem Verfahren erhaltenen Farbstofflösungen sowie deren Verwendung.

Die Selbstkondensation von 4-Nitrotoluol-2-sulfonsäure, die in einfacher Weise zu gelben Stilbenazo(xy)farbstoffen führt, ist seit langem bekannt (technische Herstellungsmethoden sind angegeben im BIOS Report 1548). Bei den so hergestellten Farbstoffen handelt es sich um substantive Farbstoffe, die vor allem zum Färben von Papier verwendet werden.

Bei Durchführung der Kondensation von 4-Nitrotoluol-2-sulfonsäure in Gegenwart von Natronlauge werden bekanntlich in Wasser schwerlösliche Natriumsalze der Stilbenazo(xy) farbstoffe erhalten. Konzentrierte wässrige Lösungen, die man z.B. zum Massefärben von Papier mit Vorteil einsetzt, können aus diesen schwerlöslichen Salzen nicht hergestellt werden, da deren Löslichkeit in Wasser nur ca. 1 g/100 ml beträgt.

Es hat daher nicht an Versuchen gefehlt, die Kondensationsreaktion so zu gestalten, dass der Farbstoff direkt in Form einer konzentrierten wässrigen Lösung anfällt.

In der DE-PS 16 44 308 ist ein Herstellungsverfahren beschrieben, nach dem die Kondensation ausgehend vom Lithiumsalz der 4-Nitrotoluol-2-sulfonsäure in Gegenwart von Lithiumhydroxid als Base durchgeführt wird, wobei der Farbstoff in Form einer hochkonzentrierten, sehr gut wasserlöslichen Farbstoffpaste erhalten wird. Die so hergestellten Lithiumsalze der Stilbenazo-(xy)farbstoffe sind nicht nur gut wasserlöslich, sondern zeichnen sich gegenüber den Natriumsalzen auch durch eine höhere Substantivität aus. Nachteil der Lithiumsalze ist jedoch, dass diese keine stabilen Farbstofflösungen ergeben; vielmehr neigen die konzentrierten Lösungen bei der Lagerung zur Gelbildung, Kristallisation oder Ausflockung, was deren Applikation erschwert oder gar verunmöglicht.

In der DE-OS 28 20 487 wird vorgeschlagen, die basenkatalysierte Selbstkondensation von 4-Nitrotoluol-2-sulfonsäure in Gegenwart von Reaktionsprodukten aus Ammoniak und Äthylenoxid, und Natrium- oder Lithiumhydroxid, bzw. in der DE-OS 30 46 450 in Gegenwart eines primären, sekundären oder tertiären Amins und Lithiumhydroxid durchzuführen. Die Sulfogruppen der auf diese Weise hergestellten Stilbenazo(xy) farbstoffe liegen zumindest teilweise als Alkalisalze vor.

Die Kondensation von 4-Nitrotoluol-2-sulfonsäure in Gegenwart von Natriumhydroxid und Alkanolaminen in wässrig/alkoholischem Medium, ist in der DE-OS 31 10 261 beschrieben. Dank dem organischen Lösungsmittel werden hierbei lagerstabile Farbstofflösungen erhalten. Nachteilig ist jedoch, dass diese Präparate einen relativ hohen Anteil an organischen Lösungsmitteln, wie Glykoläthern, enthalten, was nach der Papierfärbung zu einer starken Abwasserbelastung führt.

Ein weiterer Faktor, der die Löslichkeit der Stilbenazo(xy)farbstoffe stark beeinflusst, ist der Salzgehalt der fertigen Farbstofflösung. Da die Kondensation in stark basischem Milieu durchgeführt werden muss, fallen bei der erforderlichen Neutralisation der Reaktionslösung erhebliche Salzmengen an, die der Löslichkeit des Farbstoffes abträglich sind und daher mehr oder weniger vollständig entfernt werden müssen.

Gemäss der DE-OS 24 51 219 werden diese Natriumionen mittels der relativ teuren Hexafluorkieselsäure gefällt, und durch die Löslichkeit verbessernde Kationen ersetzt; ein Verfahren, das eine zusätzliche Filtration zur Entfernung des ausgefallenen Natriumhexafluorosilikats erforderlich macht. Eine weitere Methode zur Herstellung elektrolytarmer Farbstoffe wird in der EP-A 00 53 220 angegeben, wonach der Farbstoff zunächst in ein lipophiles Aminsalz zu überführen ist, um ihn auf diese Weise von der salzhaltigen Syntheselösung abzutrennen. Danach wird durch Zusatz von Diäthanolamin das Farbstoff-Diäthanolammoniumsalz hergestellt und das vorher verwendete lipophile Amin wieder zurückgewonnen. Dieses Verfahren ist technisch sehr aufwendig, da der Farbstoff bis zur gebrauchsfertigen Lösung eine jeweils mit einer Phasentrennung verbundene, zweimalige Umsalzung erfährt.

Aufgabe der vorliegenden Erfindung war es daher, ein Verfahren zu entwickeln, das sowohl einwandfrei reproduzierbar die Herstellung wässriger Lösungen von Stilbenazo(xy)farbstoffen erlaubt, die Cellulosematerial, insbesondere Papier, in rein gelben bis grünstichig gelben Tönen färben, als auch direkt zu gebrauchsfertigen konzentrierten lagerstabilen Farbstofflösungen führt.

Es wurde gefunden, dass man bei Durchführung der Kondensation von 4-Nitrotoluol-2-sulfonsäure in alkalischer wässriger Lösung in Gegenwart eines spezifischen Gemisches von Monoalkanolamin und Di- bzw. Trialkanolamin eine Farbstofflösung erhält, die die gestellten Anforderungen in Bezug auf Konzentration, Lagerstabilität und vor allem hinsichtlich des Farbtones voll erfüllt und zwar überraschenderweise selbst bei Verwendung von Natriumhydroxid als Alkali.

Gegenstand der Erfindung ist somit ein Verfahren zur Herstellung konzentrierter lagerstabiler wässriger Farbstofflösungen enthaltend ein Gemisch gelber bis grünstichig gelber Stilbenazo-(xy)farbstoffe, durch basenkatalysierte Selbstkondensation von 4-Nitrotoluol-2-sulfonsäure während mehrerer Stunden in der Wärme, dadurch gekennzeichnet, dass man die Kondensation in Gegenwart von 0,2 bis 0,8 Mol eines $C_2$–$C_4$-Monoalkanolamins und 0,8 bis 1,5 Mol eines $C_2$–$C_4$-Di- bzw. -Trialkanolamins, jeweils bezogen auf 1 Mol 4-Nitrotoluol-2-sulfonsäure, und Alkali durchführt und dass man nach Neutralisieren des Reaktionsgemisches oder gleichzeitig damit anorganische Salze bzw. Alkalimetallionen aus der Farbstofflösung mittels eines einfachen und kostengünstigen Entsalzungsverfahrens entfernt.

Als $C_2$–$C_4$-Monoalkanolamine kommen beispielsweise in Betracht: Äthanolamin, n-Propanolamin, 1-Amino-2-propanol, 2-Amino-1-propanol, n-Butanolamin, 2-Amino-1-butanol oder 2-Hydroxyäthoxyäthylamin. Als $C_2$–$C_4$-Dialkanolamine kommen Diäthanolamin oder Diisopropanolamin in Frage, als $C_2$–$C_4$-Trialkanolamin das Triäthanolamin bzw. Triisopropanolamin.

Durch die Wahl des Verhältnisses von Monoalkanolamin zu Dialkanol- bzw. Trialkanolamin lässt sich der Farbton im gewünschten Bereich von $\lambda_{max} = 400$ bis 425 nm variieren. Zur Erzielung einer rein gelben bis grünstichig gelben Nuance wird besonders bevorzugt ein Gemisch aus Äthanolamin und Diäthanolamin und zwar in Mengen von 0,3 bis 0,5 Mol Äthanolamin und 0,9 bis 1,2 Mol Diäthanolamin, bezogen auf 1 Mol 4-Nitrotoluol-2-sulfonsäure, verwendet. Je weniger Diäthanolamin zugesetzt wird, um so grünstichiger ist die mit der gebrauchsfertigen Farbstofflösung erhaltene Ausfärbung.

Das Verfahren lässt sich technisch so durchführen, dass die Gesamtmenge an Monoalkanolamin und Di- bzw. Trialkanolamin bereits zu Beginn der Farbstoffkondensation zugesetzt wird. Es ist jedoch auch möglich, 60 bis 90 Gew.-% der genannten Di- bzw. Trialkanolaminmenge erst gegen Ende der Kondensation zuzugeben.

Als Alkali werden Natriumhydroxid, Kaliumhydroxid, Lithiumhydroxid oder Cäsiumhydroxid verwendet. Besonders bevorzugt wird Natriumhydroxid. Die Menge des verwendeten Alkalihydroxids kann in weiten Grenzen variieren. Aufgrund des nach erfolgter Farbstoffkondensation abzutrennenden Salzes hat es sich jedoch als günstig erwiesen, die Alkalihydroxidmenge möglichst niedrig zu halten. Unter den oben angegebenen Mengenverhältnissen für Monoalkanolamin/Di- bzw. Trialkanolamin pro Mol 4-Nitrotoluol-2-sulfonsäure werden vorteilhaft 1,3 bis 1,6 Mol Natriumhydroxid verwendet.

Ist die Selbstkondensation der 4-Nitrotoluol-2-sulfonsäure genügend weit fortgeschritten, was bei einer Reaktionstemperatur von ca. 70° bis 75 °C nach 5 bis 15 Stunden der Fall ist, so wird die Reaktionslösung aufgearbeitet. Zweckmässigerweise wird diese entweder neutralisiert, z.B. mit einer starken anorganischen Säure, und das dabei entstehende Salz mittels Membrantrennverfahren abgetrennt, oder aber die alkalische Reaktionslösung mit einem sauren Ionenaustauscher versetzt und auf diese Weise ein neutraler pH-Wert eingestellt und damit gleichzeitig die in der Lösung vorhandenen Metallionen gebunden.

Die Herstellung lagerstabiler konzentrierter Farbstofflösungen von Stilbenazo(xy)farbstoffen mittels Membrantrennverfahren ist technisch vorteilhaft, da die Abtrennung der durch Neutralisation entstandenen Salze ohne deren direkte Isolierung gelingt und gemäss diesem Verfahren das wesentlich billigere Natriumhydroxid anstelle des sonst üblichen Lithiumhydroxids verwendet werden kann. Aus der DE-OS 28 05 891 ist bekannt, Umsalzungen von sulfogruppenhaltigen Farbstoffen und Aufhellern mittels Membrantrennprozessen in Gegenwart von solchen Ammoniumsalzen durchzuführen, deren Molekulargewicht mindestens gleich oder grösser als dasjenige der Farbstoffe ist, um so das gleichzeitige Abtrennen dieser Ammoniumsalze aus der Farbstofflösung zu verhindern. Es ist deshalb besonders überraschend, dass gemäss dem vorliegenden Membrantrennverfahren auch die niedermolekularen Amine, wie Äthanolamin bzw. Diäthanolamin, während der Ent- und Umsalzung nicht abgetrennt werden.

Als Membrantrennverfahren hat sich vor allem die Hyperfiltration bewährt. Bei diesem Trennverfahren handelt es sich im Gegensatz zur üblichen Filtration, wobei Feststoffteilchen von einer Flüssigkeit abgetrennt werden, um eine selektive Molekulartrennmethode. Die Membran wirkt als Molekularsieb, und vermag aufgelöste Stoffe, bei ausreichender Molekulargrösse an der Membrangrenzfläche zurückzuhalten. Zweckmässig verwendet man Membranen mit einem «cut off level», der eine mindestens 90%ige Retention ermöglicht. Hierbei handelt es sich um solche Membranen, deren Trenngrenze im Molekulargewichtsbereich von 300 bis 800, vorzugsweise 400 bis 500, liegt und die symmetrisch oder insbesondere asymmetrisch sind. Sie lassen Wasser und aufgelöste Stoffe, die auf Grund ihres Molekulargewichtes unterhalb der Trenngrenze liegen, bei geringem bis mittlerem Druck durchtreten. Üblicherweise werden Drucke von 10 bis 100 bar und vorzugsweise von 10 bis 30 bar verwendet.

Bewährt haben sich insbesondere Membranen aus Celluloseacetat, Polyvinylalkohol oder auch Polyacrylnitril, die durch Reaktivfarbstoffe modifiziert sind, die Sulfogruppen und/oder Carboxylgruppen enthalten. Derartige Membranen sind z.B. in der EP-A 00 25 973 beschrieben. Die Membranen weisen einen Porendurchmesser von 0,1 bis 50 nm auf.

Bei der Neutralisation mittels Ionenaustauscher werden sowohl stark saure wie auch schwach saure Ionenaustauscher verwendet, beispielsweise solche vom Carbonsäuretyp. Der Austauscher wird der alkalischen Farbstofflösung in der $H^+$-Form zugegeben und zwar in einer solchen Menge, dass die von der zur Kondensation verwendeten Lauge stammenden Metallionen nahezu quantitativ gebunden werden. Nach dem Membrantrennverfahren bzw. nach der Behandlung mit dem Ionenaustauscher liegen die Stilbenazo(xy)farbstoffe praktisch vollständig als Monoalkanol-/Di- bzw. Trialkanolaminsalze vor.

Das Ionenaustauscher-Verfahren ist technisch besonders einfach durchführbar, da die direkte Zugabe des Ionenaustauschers zum stark alkalischen Reaktionsmedium nach erfolgter Farbstoffkondensation sowohl eine Neutralisation als auch eine Entfernung von Alkalimetall-Ionen bewirkt. Mit fortschreitender Neutralisation des Reaktionsmediums geht der vorher teilweise ausgefallene Farbstoff zusehends in Lösung, bis am Neutralpunkt der Farbstoff in völlig gelöster Form vorliegt, so dass nach allfälligem Zusatz von Harnstoff und Abfiltration des Ionenaustauschers das Filtrat direkt die konzentrierte lagerstabile flüssige Handelsform des Farbstoffes darstellt.

Die nach dem erfindungsgemässen Verfahren hergestellten Farbstofflösungen können noch weitere Hilfsmittel, wie Formamid, Dimethylformamid, Glykol, Diäthylen- und Triäthylenglykol sowie deren Mono- und Dialkyläther, ferner Polyalkylenglykole mit einem Molgewicht von 400 bis 4 000 oder auch Benzylalkohol, insbesondere jedoch Harnstoff enthalten und zwar bis zu 35 Gew.-%, bezogen auf die fertige Farbstofflösung. Die Hilfsmittel werden zweckmässigerweise der neutralen und entsalzten Farbstofflösung zugesetzt.

Die Farbstofflösungen gemäss vorliegender Erfindung eignen sich vorzugsweise für die Herstellung von in der Masse gefärbtem, geleimtem und ungeleimtem Papier. Sie können jedoch ebenfalls zum Färben von Papier nach dem Tauchverfahren und in der Leimpresse Verwendung finden. Die Färbungen zeichnen sich durch gute Abwasserechtheit aus, die Farbstoffe färben die Abwässer bei der Papierherstellung nur wenig an; sie melieren nicht und färben Papier nicht zweiseitig. Die erhaltenen Papierfärbungen zeigen gute Lichtechtheit, bei längerem Belichten ändert sich die Nuance Ton in Ton, und insbesondere auch gute Nassechtheiten.

Das erfindungsgemässe Verfahren wird beispielsweise so durchgeführt, dass man die 4-Nitrotoluol -2- sulfonsäure in ein Gemisch aus Wasser, Äthanolamin, Diäthanolamin und Natriumhydroxid einträgt. Die Menge der Alkanolamine bewegt sich, je nach angestrebtem Farbton, in den bereits angegebenen Grenzen. Das Natriumhydroxid wird in einem ca. 1/2 molaren Überschuss bezogen auf die 4-Nitrotoluol -2- sulfonsäure eingesetzt, da nicht nur die rohe Sulfonsäure, sondern auch anhaftende Schwefelsäurereste neutralisiert werden müssen, bevor ein pH-Wert von ca. 11 bis 13 eingestellt werden kann. Das Reaktionsgemisch wird auf 60° bis 80 °C erwärmt und ca. 5 bis 15 Stunden in diesem Temperaturbereich gehalten. Gegen Ende der Kondensation wird das Reaktionsgemisch mit Wasser verdünnt und neutralisiert. Die Entfernung anorganischer Salze bzw. von Metallionen erfolgt, wie bereits angegeben, mittels Membrantrennverfahren oder durch Ionenaustausch.

Die nachfolgenden Beispiele dienen der Erläuterung der Erfindung; Temperaturen sind in °C angegeben.

Beispiel 1

In einem vorgelegten Gemisch aus 600 ml Wasser von 55 bis 60°, 21,7 g (0,35 Mol) Äthanolamin und 30 g (0,28 Mol) Diäthanolamin werden 60 g festes Natriumhydroxid (1,5 Mol) gelöst und hierauf 217 g (1,0 Mol) 4-Nitrotoluol -2- sulfonsäure in Form eines 85,5%igen feuchten Presskuchens, welcher noch 2,2% Restschwefelsäure enthält, eingetragen. Die Kondensationsreaktion setzt sofort mit schwacher Wärmetönung ein. Man steigert die Reaktionstemperatur innert einer Stunde auf 70 bis 72° und hält das Reaktionsgemisch weitere 5 Stunden bei dieser Temperatur. Danach versetzt man das Reaktionsgemisch mit 1 250 ml Wasser und 82 g (0,78 Mol) Diäthanolamin und rührt den Ansatz noch eine Stunde bei 70 bis 72°. Hierauf neutralisiert man mit konz. Salzsäure auf pH 7,0 und stellt mit Wasser auf ein Gesamtvolumen von 2500 ml.

Die so erhaltene Farbstofflösung wird auf einer Anlage für Hyperfiltration (Membranfläche 0,065 m²) entsalzt, bis ein Restsalzgehalt von 0,1 bis 0,2 Gew.-% erreicht ist. Als Membran wird eine modifizierte Polyacrylnitril-Membran, deren Herstellung in der europäischen Patentanmeldung 00 25 973 beschrieben ist, verwendet. Die Hyperfiltration wird bei einem Druck von 25 bar und einer Temperatur von 40 bis 45° durchgeführt. Überraschenderweise werden durch die Hyperfiltration keine nennenswerten Mengen an Äthanolamin/Diäthanolamin aus der Farbstofflösung abgetrennt.

Die entsalzte Farbstofflösung wird abschliessend mit 30 Gew.-%, bezogen auf die fertige Flüssigformulierung, an Harnstoff versetzt. Die so erhaltene Farbstofflösung ist lagerstabil und praktisch von gleicher Konzentration, wie eine gemäss DE-PS 16 44 308 hergestellte Lösung, in der der Farbstoff in der Lithiumsalzform vorliegt. Der $\lambda_{max}$-Wert der Farbstofflösung beträgt 408 nm. Das mit dieser Lösung gefärbte Papier weist einen intensiven, rein gelben Farbton auf. Die Färbung ist von guter Nassechtheit.

Beispiel 2

Arbeitet man wie in Beispiel 1 beschrieben, ersetzt jedoch das für die Farbstoffkondensation verwendete Amingemisch durch 30,5 g (0,5 Mol) Äthanolamin und 15,0 g (0,14 Mol) Diäthanolamin, so erhält man nach der Hyperfiltration eine Farbstofflösung mit einem $\lambda_{max}$ von 406 nm, welche Papier etwas grünstichiger gelb und eine Spur bis etwas reiner färbt, als die nach Beispiel 1 erhaltene Farbstofflösung.

Beispiel 3

Man legt ein Gemisch aus 420 ml Wasser, 15,2 g (0,25 Mol) Äthanolamin und 21 g (0,2 Mol) Diäthanolamin vor und löst darin 42 g festes Natriumhydroxid. Anschliessend erwärmt man das Gemisch auf 60 bis 62°. Hierauf trägt man 151,9 g (0,7 Mol) 4-Nitrotoluol -2- sulfonsäure in Form eines 85,5%igen feuchten Presskuchens mit einem Restgehalt von 2,2% Schwefelsäure ein. Man steigert die Temperatur innert einer Stunde auf 70 bis 72° und überlässt das Gemisch noch weitere 5 Stunden bei dieser Reaktionstemperatur der Selbstkondensation. Danach versetzt man mit 175 ml Wasser und 57,8 g (0,55 Mol) Diäthanolamin und rührt das Reaktionsgemisch noch eine Stunde bei 63 bis 65°. Zur Neutralisation und damit gleichzeitig verbundenen Entfernung von Natriumionen versetzt man das Reaktionsgemisch innerhalb von 30 Minuten unter Rühren portionsweise mit einem schwach sauren Ionenaustauscher vom Carbonsäure-Typ (Amberlite IRC-84; Austauschkapazität 10 meq/g), bis ein pH-Wert von 7,0 erreicht ist. Hierfür werden ca. 240 g des feuchten Ionenaustauscherharzes benötigt. Mit fortschreitender Bindung der Natriumionen an das Austauscherharz geht die feine gelbbraune Suspension allmählich in eine Lösung über, bis schliesslich bei pH 7 eine klare Lösung vorliegt. Man rührt noch 15 bis 30 Minuten nach, filtriert sodann den Ionenaustauscher von der dunkelbraunen Farbstofflösung ab und wäscht das abgetrennte Ionenaustauscherharz portionsweise mit 110 ml Wasser weitgehend farbstoff frei. Die vereinigten Filtrate werden durch Zusatz von Wasser auf ein Gesamtgewicht von 1 kg Farbstofflösung gebracht, in die man 240 g Harnstoff einrührt. Man erhält so eine lagerstabile gebrauchsfertige Flüssigformulierung, die Papier in reingelber Nuance färbt. Die Ausfärbungen zeigen gute Nassechtheiten. Der $\lambda_{max}$-Wert der Farbstofflösung beträgt 412 nm.

Das Ionenaustauscherharz aus jeweils 4 bis 5 Ansätzen wird gesammelt, in 1000 ml Wasser angeschlämmt, durch Zusatz von konz. Salzsäure regeneriert und mit Wasser so lange nachgewaschen, bis der Ablauf frei von Chloridionen ist. Das auf diese Weise regenerierte Austauscherharz kann für die nachfolgenden Reaktionsansätze wiederverwendet werden.

Beispiel 4

Arbeitet man wie in Beispiel 1 beschrieben, ersetzt jedoch das für die Farbstoffkondensation verwendete Amingemisch durch 21,8 g (0,35 Mol) Äthanolamin und 95,1 g (0,71 Mol) Diisopropanolamin und setzt nach erfolgter Farbstoffkondensation anstelle von Diäthanolamin noch 47,55 g (0,36 Mol) Diisopropanolamin zu, so erhält man nach der Hyperfiltration eine Farbstofflösung, welche Papier in einer etwas rotstichiger gelben Nuance färbt, als die nach Beispiel 1 erhaltene Farbstofflösung. Der $\lambda_{max}$-Wert der gebrauchsfertigen Farbstofflösung liegt bei 412 nm.

Färbebeispiel (Papier) 10 g gebleichte Cellulose werden in 500 ml Wasser von pH 7 eingetragen und 30 Minuten gequollen. Danach rührt man noch weitere 30 Minuten und setzt 2,5 g der nach Beispiel 1 erhaltenen Farbstofflösung zu. Man rührt zur gleichmässigen Durchmischung 15 Minuten, stellt mit Wasser von pH 7 auf ein Gesamtvolumen von 700 ml und führt mit dieser Flotte die Blattbildung durch. Das erhaltene Papier besitzt eine intensive gelbe Nuance mit guten Nassechtheiten.

Vergleichsbeispiel Man arbeitet genau wie in Beispiel 1 beschrieben, ersetzt jedoch das dort verwendete Amingemisch aus Monoäthanolamin und Diäthanolamin durch die äquimolare Menge an Diäthanolamin (150 g, entsprechend 1,43 Mol).

Es resultiert eine Farbstofflösung, welche Papier mit beträchtlich röterer und deutlich bis beträchtlich trüberer Nuance färbt, als diejenige, welche gemäss Beispiel 1 erhalten wird.

## Patentansprüche

1. Verfahren zur Herstellung konzentrierter lagerstabiler wässriger Farbstofflösungen enthaltend ein Gemisch gelber bis grünstichig gelber Stilbenazo(xy)farbstoffe durch basenkatalysierte Selbstkondensation von 4-Nitrotoluol -2- sulfonsäure während mehrerer Stunden in der Wärme, dadurch gekennzeichnet, dass man die Kondensation in Gegenwart von 0,2 bis 0,8 Mol eines $C_2$–$C_4$-Monoalkanolamins und 0,8 bis 1,5 Mol eines $C_2$–$C_4$-Di- bzw. -Trialkanolamins, jeweils bezogen auf 1 Mol 4-Nitrotoluol -2- sulfonsäure, und Alkali durchführt, und dass man nach Neutralisieren des Reaktionsgemisches oder gleichzeitig damit anorganische Salze bzw. Alkalimetallionen aus der Farbstofflösung entfernt.

2. Verfahren gemäss Anspruch 1, dadurch gekennzeichnet, dass man als $C_2$–$C_4$-Monoalkanolamin Äthanolamin und als $C_2$–$C_4$-Dialkanolamin Diäthanolamin verwendet.

3. Verfahren gemäss Anspruch 1, dadurch gekennzeichnet, dass man 0,3 bis 0,5 Mol Äthanolamin und 0,9 bis 1,2 Mol Diäthanolamin, bezogen auf 1 Mol 4-Nitrotoluol -2- sulfonsäure, verwendet.

4. Verfahren gemäss Anspruch 1, dadurch gekennzeichnet, dass man als Alkali Natriumhydroxid verwendet.

5. Verfahren gemäss Ansprüchen 1 bis 3, dadurch gekennzeichnet, dass 60 bis 90 Gew.-% der angegebenen Di- bzw. Trialkanolaminmenge erst gegen Ende der Kondensation zugesetzt werden.

6. Verfahren gemäss Anspruch 1, dadurch gekennzeichnet, dass man das Reaktionsgemisch mittels einer starken anorganischen Säure neutralisiert und anschliessend die Farbstofflösung über ein Membrantrennverfahren entsalzt.

7. Verfahren gemäss Anspruch 6, dadurch gekennzeichnet, dass das Membrantrennverfahren aus einer Hyperfiltration besteht.

8. Verfahren gemäss Anspruch 1, dadurch gekennzeichnet, dass zur Neutralisation und gleichzeitigen Entfernung von Alkalimetallionen ein Ionenaustauscher in der $H^+$-Form verwendet wird.

9. Verfahren gemäss Anspruch 1, dadurch gekennzeichnet, dass man die neutrale und entsalzte Farbstofflösung noch mit weiteren Hilfsmitteln, insbesondere Harnstoff, versetzt.

10. Verwendung der nach dem Verfahren gemäss Anspruch 1 erhaltenen konzentrierten, lagerstabilen Farbstofflösung zum Färben von Cellulosematerial, insbesondere Papier.

## Revendications

1. Procédé de préparation de solutions de colorants aqueuses concentrées, stables au stokkage, contenant un mélange de colorants azostilbène ou azoxystilbène jaune à jaune verdâtre par autocondensation, catalysée par des bases, d'acide 4-nitrotoluène -2- sulfonique pendant plusieurs heures à la chaleur, caractérisé par le fait que l'on réalise la condensation en présence de 0,2 à 0,8 mole d'une monoalcanolamine en $C_2$–$C_4$ et de 0,8 à 1,5 mole d'une di- ou trialcanolamine en $C_2$–$C_4$, pour chacune par mole d'acide 4-nitrotoluène -2- sulfonique, et d'alcali, et par le fait que l'on sépare, après la neutralisation du mélange réactionnel ou en même temps, les sels inorganiques ou les ions de métal alcalin de la solution de colorants.

2. Procédé selon la revendication 1, caractérisé par le fait que l'on utilise comme monoalcanolamine en $C_2$–$C_4$ l'éthanolamine et comme dialcanolamine en $C_2$–$C_4$ la diéthanolamine.

3. Procédé selon la revendication 1, caractérisé par le fait que l'on utilise de 0,3 à 0,5 mole d'éthanolamine et de 0,9 à 1,2 mole de diéthanolamine, par rapport à 1 mole d'acide 4-nitrotoluène -2- sulfonique.

4. Procédé selon la revendication 1, caractérisé par le fait que l'on utilise comme alcali l'hydroxyde de sodium.

5. Procédé selon les revendications 1 à 3, caractérisé par le fait que l'on introduit 60 à 90% en poids de la quantité indiquée de di- ou tri-alcanolamine seulement vers la fin de la condensation.

6. Procédé selon la revendication 1, caractérisé par le fait que l'on neutralise le mélange réactionnel au moyen d'un acide fort inorganique et que, ensuite, on élimine les sels de la solution de colorants par un procédé de séparation par membrane.

7. Procédé selon la revendication 6, caractérisé par le fait que le procédé de séparation par membrane consiste en une hyperfiltration.

8. Procédé selon la revendication 1, caractérisé par le fait que, pour la neutralisation et l'élimination simultanée des ions de métal alcalin, on utilise un échangeur d'ions sous sa forme H$^+$.

9. Procédé selon la revendication 1, caractérisé par le fait que l'on additionne à la solution de colorants neutre et dessalée encore d'autres adjuvants, en particulier de l'urée.

10. Utilisation de la solution de colorants concentrée, stable au stockage, obtenue selon le procédé conforme à la revendication 1, pour la teinture des matières cellulosiques, en particulier du papier.

## Claims

1. A process for the preparation of a concentrated storage-stable aqueous dye solution which contains a mixture of yellow to greenish yellow stilbeneazo(xy) dyes obtained by base-catalysed self-condensation of 4-nitrotoluene -2- sulfonic acid under heat over several hours, which process comprises carrying out the condensation in the presence of 0,2 to 0,8 mol of a $C_2$–$C_4$ monoalkanolamine and 0,8 to 1,5 mol of a $C_2$–$C_4$ dialkanolamine or $C_2$–$C_4$ trialkanolamine, each based on 1 mol of 4-nitrotoluene -2- sulfonic acid, and alkali, and, after the reaction mixture has been neutralised or at the same time, removing inorganic salts or alkali metal ions from the dye solution.

2. A process according to claim 1, wherein the $C_2$–$C_4$ monoalkanolamine is ethanolamine and the $C_2$–$C_4$ dialkanolamine is diethanolamine.

3. A process according to claim 1, wherein 0,3 to 0,5 mol of ethanolamine and 0,9 to 1,2 mol of diethanolamine are used per mol of 4-nitrotoluene -2- sulfonic acid.

4. A process according to claim 1, wherein the alkali is sodium hydroxide.

5. A process according to any one of claims 1 to 3, wherein 60 to 90% by weight of the specified amount of di- or trialkanolamine are only added towards the end of the condensation.

6. A process according to claim 1, wherein the reaction mixture is neutralised by means of a strong inorganic acid and the dye solution is then desalted by means of a membrane-separating method.

7. A process according to claim 6, wherein the membrane-separating method consists in a hyperfiltration.

8. A process according to claim 1, wherein an ion exchange material in the H$^+$ form is used for the neutralisation and the simultaneous removal of alkali metal ions.

9. A process according to claim 1, wherein further assistants, in particular urea, are added to the neutral and desalted dye solution.

10. Use of the concentrated storage-stable dye solution obtained by the process according to claim 1, for dyeing cellulosic material, in particular paper.